# EUROPEAN PATENT APPLICATION

(11) **EP 4 006 332 A1**
(43) Date of publication of application: **01.06.2022**
(21) Application number: 20210728.0
(22) Date of filing: 30.11.2020
(51) Int. Cl.: F03D 1/04, F03D 1/02

(54) **WIND POWER STATION**

(71) Applicant: FlowGen Development & Management AG, 6300 Zug (CH)
(72) Inventor: KÜSTER, Dirk, 6417 Sattel (CH)
(74) Representative: Schaad, Balass, Menzl & Partner AG

(57) **Abstract**

A wind power station (2) is disclosed, comprising a flow channel (4) extending at least approximately in a vertical direction between an inlet (6) and an outlet (8), and a wind turbine (10) for producing electrical energy having a propeller (14), the propeller (14) being arranged downstream of the outlet (8) and overlapping the outlet, characterized in that the wind power station (2) is designed to surround a heat exchanger wall (30) of a heat exchanger, said heat exchanger wall (30) being arranged in the flow channel (4) and designed to transfer heat to a fluid in the flow channel (4) to induce a fluid flow in the flow channel (4) impinging on the wind turbine (10).

## Description

The present invention relates to a wind power station according to the preamble of claim 1.

DE 199 37 800 A1 discloses an air-cooled condenser for steam condensation having, at some distance above the ground several arrays of tubes supported by an infrastructure. The infrastructure is formed in the shape of a roof type construction above a ventilating fan and designed to be self-supporting. Top ends of the tube arrays are connected to a steam dispensing pipe arranged at the top of the roof type construction, and the bottom ends of the tube arrays are connected to a condensate collecting pipe.

This air-cooled condenser is a special form of air-cooled heat exchangers serving for cooling fluids by means of ambient air in various processes in the chemical, petrochemical and electricity generation industries. The heat exchangers are composed substantially of heat exchanger tubes combined to form of heat exchanger walls, which are preferably provided with fins on the outer side to improve the heat transfer. The cooling medium, air, is conveyed through the heat exchanger walls preferably by means of fans which are arranged to impart a suction or pressure action. In the roof type construction referred to in DE 199 37 800 A1, fans of axial type of construction are used and situated, in an arrangement for imparting a pressure action, below the heat exchanger walls.

DE 103 23 791 A1 discloses an air-cooled heat exchanger having heat exchanger walls in a V-shaped arrangement with fans of axial type of construction situated at the top of the V-shaped arrangement. The fans are situated in an arrangement for imparting a suction action above the heat exchanger walls.

In both configurations, electrical energy is used to drive the fans to convey cool air through the heat exchanger walls and create an air flow. In parallel, the conveyed cool air heats up while cooling the heat exchanger walls and naturally moves upwards by thermal convection. This energy is lost as the air flow dissipates into the environment of the heat exchangers.

It is an object of the present invention to specify a wind power station for using the air flow created by a heat exchanger to generate electrical energy.

Said object is achieved by means of a wind power station having the features of patent claim 1.

Advantageous refinements of the invention are the subject of the dependent claims.

The wind power station comprises a flow channel extending at least approximately in a vertical direction between an inlet and an outlet, and a wind turbine, which is arranged above the outlet and designed to produce electrical energy.

An exemplary wind turbine for this purpose is described in Patent Application Publication No. EP 3 473 848 A1, filed on October 20, 2017, the entire contents of which, in particular the paragraphs [0007] to [0027] as well as [0033] and [0034] specifying the wind turbine, are incorporated herein by reference.

It is noted that the wind turbine disclosed in this reference comprises a horizontal propeller axis of rotation. However, mutatis mutandis, the teaching can be applied to a wind turbine having a vertical propeller axis of rotation like it is normally the case in the previous invention. In any case, wind turbines that can be used in the present wind power station are not limited to the type cited in reference.

The flow channel delimits a channel for a fluid, in particular air, to which it is referred to in the present disclosure as a preferred form of fluid.

The wind turbine comprises a propeller arranged downstream from the outlet, as viewed in a direction of flow of the air, wherein the propeller overlaps at least partially the outlet. In other words, the surface covered by the propeller in motion overlaps at least partially the outlet, as viewed in the direction of flow of the air. This arrangement ensures that most of the air flowing through the outlet flows through the wind turbine and transfers its kinetic energy to the propeller for conversion in electrical energy by the wind turbine.

In a preferred embodiment an annular wall can project to the outside of the flow channel from the border of the outlet to conduct the air flow in the wind turbine and limit air flowing outside of the wind turbine.

Presently, the inlet is arranged at the bottom of the flow channel and the outlet is arranged at the top of the flow channel, as seen in the vertical direction. The outlet can be formed by a single opening and the wind turbine is arranged in the single opening. The outlet can also be formed by a plurality of openings and the wind turbine can be arranged in one of the plurality of openings. It is also possible to provide for a plurality of wind turbines that are each arranged in one of the plurality of openings. Such an arrangement can be used for flow channels having a cross-section area corresponding to the cross-section area of more than one wind turbine to increase the electrical energy produced.

In a preferred embodiment the outlet is a circular opening having a diameter substantially the same or greater than the diameter of the propeller. The term "greater" is to be understood as greater than the diameter of the propeller to allow for example a configuration in which the propeller is arranged in the plane of the outlet or within the annular wall projecting from the border of the outlet, while avoiding unnecessary air leakage between the propeller and the outlet on the inner border region of the outlet and allowing proper operation of the propeller. Typically, the diameter of the outlet is less than 5% greater than the diameter of the propeller. Further, a propeller axis of rotation is centered with respect to the outlet opening to optimize the quantity of air flowing through the wind turbine.

The flow channel preferably extends vertically to limit the turbulence in the air flow.

According to the invention the wind power station is designed to surround a heat exchanger wall of a heat exchanger, wherein heat exchanger wall being arranged in the flow channel between the inlet and the wind turbine, as seen in the vertical direction. In particular, the flow channel is designed to surround the heat exchanger wall. The flow channel can be formed as an encasing in which the heat exchanger wall is arranged. The heat exchanger wall is designed to transfer heat to air in the flow channel and as a result an air flow is induced in the flow channel and impinges on the propeller of the wind turbine. Since the air in the flow channel heats up while cooling the heat exchanger wall, heated air forms the air flow flowing naturally upwards due to thermal convection. After reaching the outlet, air flows in the wind turbine where kinetic energy of the air flow is transformed in electrical energy instead of dissipating in the environment. As result, at least part of the energy dissipated by the heat exchanger wall in the environment is recycled so that it can be operated more environmentally friendly and overall, less expensively.

In a preferred embodiment, the heat exchanger wall is part of a heat exchanger which is an air-cooled condenser system, in which air steam is condensed, in particular an air-cooled condenser for condensing turbine or process exhaust steam in a power plant.

An exemplary air-cooled condenser for steam condensation is disclosed in DE 199 37 800 A1, as mentioned in the introduction. The heat exchanger wall is formed in the shape of a roof type construction and is composed substantially of heat exchanger tubes combined to form a wall portion of the heat exchanger wall on each side of the roof type construction. The roof type construction can be arranged above a ventilating fan improving the cooling properties of the heat exchanger wall by conveying air through the heat exchanger wall. For the sake of efficiency, a plurality of ventilating fans can be provided.

A bottom of the flow channel can be delimited by a bottom wall in which the inlet is formed and in which the plurality of ventilating fans can be arranged. The horizontal cross section of the flow channel can be in the form of a rectangle extending along the longitudinal direction of the heat exchanger wall.

Since electrical energy is used to drive the ventilating fan to convey cool air through the heat exchanger wall, kinetic energy of the air flow in the flow channel is increased and more energy can be recycled in electrical energy.

Such air-cooled heat exchangers are used for cooling fluids by means of ambient air in various processes in the chemical, petrochemical and electricity generation industries, so that numerous applications of the present wind power station are possible.

In a preferred embodiment, lateral walls surround the heat exchanger wall and delimit the flow channel laterally. The lateral walls support the formation of an air flow upwards and reduce the turbulences. For example, wind blowing from the environment of the heat exchanger does not dissipate the air flow outside of the flow channel. In some embodiments, the lateral walls can comprise lateral walls of the heat exchanger initially present for the operation of the heat exchanger, i.e. lateral walls conceived for the operation of the heat exchanger without wind power station.

In a preferred embodiment, the wind turbine comprises a propeller which is rotatable about the propeller axis arranged in the vertical direction. Preferably, the outlet extends in a horizontal plane and the propeller axis extends perpendicular to the plane of the outlet. In view of the extension of the air flow in the vertical upwards direction due to thermal convection for example, this embodiment offers an optimal orientation of the propeller axis to convert the kinetic energy of the air flow in electrical energy.

In a preferred embodiment, the wind turbine is mounted on a support structure extending outside of the flow channel. This embodiment has the advantage that the wind turbine can be mounted on numerous flow channels regardless of other installations already installed in the flow channel. Further, maintenance is simplified because it can be performed without entering in the flow channel. The wind turbine can be mounted on the support structure by way of the propeller axis in a particular simple embodiment.

In a preferred embodiment, the support structure comprises a girder to which the propeller axis is attached and extending above the plane of the outlet. Preferably, the girder extends at least approximately parallel to the plane of the outlet. This construction is particularly simple and economical to implement.

In a preferred embodiment, the girder is designed to be attached at a girder end portion to a wall structure extending adjacent to the flow channel. This construction takes advantages of possible existing infrastructures close to the implantation site of the wind power station, specially of the flow channel.

In a preferred embodiment, the girder is attached at a girder end portion to a flow channel structure defining the flow channel, for example the lateral walls of the flow channel. This embodiment is foreseeable as an alternative solution to the previous one, when there is no adjacent infrastructure in the vicinity of the flow channel. However, it can also be seen as a complementary solution to the previous one, one end portion of the girder being fixed to a wall structure adjacent to the flow channel and the other end portion being supported by the flow channel structure itself.

In a preferred embodiment, the wind turbine is mounted on a support mast extending through the flow channel, the propeller axis extending in the vertical direction. In this embodiment, it is possible to use particularly large and heavy wind turbine that can be supported by way of the support mast regardless of the resistance of the flow channel structure. The wind turbine can be mounted on the support mast by way of the propeller axis in a particular simple embodiment.

In a preferred embodiment, a top wall delimits the flow channel in the vertical direction, and the outlet is formed in the top wall. The top wall forces the air flow in the flow channel into the wind turbine so that an increased part of the air flow flows into the wind turbine and the generation of electrical energy is increased.

In a preferred embodiment, a plurality of wind turbines is arranged at least partially above the outlet. This configuration allows an optimum coverage of the outlet to optimize the air flow flowing into the wind turbines.

In a further aspect, the invention also relates to the conversion of a heat exchanger wall of an air-cooled condenser, in which air steam is condensed, in particular an air-cooled condenser for condensing turbine or process exhaust steam in a power plant, in a wind power station according to any one of the previous embodiments. Such a conversion allows for the recycling of the energy dissipated by the heat exchanger wall and, if used, of the energy dissipated by ventilating fans associated to the heat exchanger wall into electrical energy. As a result, the exploitation costs of the power plant are correspondingly reduced.

In a further aspect, the invention also relates to an installation comprising a heat exchanger wall of an air-cooled condenser, in which air steam is condensed, in particular of an air-cooled condenser for condensing turbine or process exhaust steam in a power plant and a wind power station according to any one of the previous embodiments.

The present invention will now be described, by way of an example, with reference to the accompanying drawings in which:
Fig. 1 shows a perspective view of the wind power station;
Fig. 2 shows a top view of the wind power station according to Fig. 1; and
Fig. 3 shows a vertical cross section along the line III-III of the wind power station according to Fig. 1.

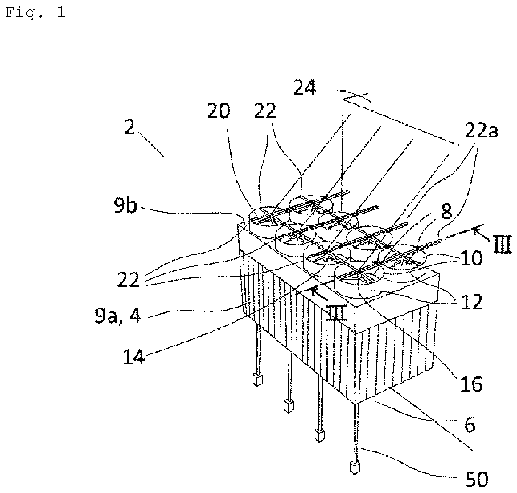

Referring to Fig. 1, Fig. 2 and Fig.3 which will be discussed together, the wind power station 2 according to the invention comprises a flow channel 4 extending in a vertical direction between an inlet 6 and an outlet 8 formed by a plurality of circular openings. Lateral walls 9a delimit the flow channel laterally and support the formation of an air flow upwards while reducing turbulences caused, for example, by external factors. A top wall 9b delimits the flow channel 4 in the vertical direction, and the outlet 8, i.e. the plurality of openings, is formed in the top wall 9b.

A plurality of wind turbines 10 designed to produce electrical energy are arranged each above one of the plurality of openings. For the sake of clarity, a control system of the wind turbines is not represented. An annular wall 12 projects to the outside of the flow channel 4 from the border of the plurality of openings to conduct the air flow in the wind turbines 10 and limit air flowing outside of the wind turbines 10.

The wind turbines 10 comprise each a propeller 14 which is rotatable about a propeller axis of rotation 16 arranged in the vertical direction, perpendicular to the top wall 9, and centered with respect to the circular opening, to optimize the quantity of air flowing through each wind turbine.

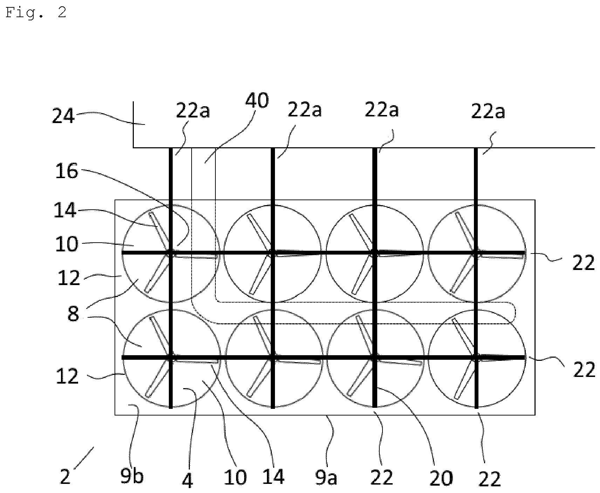

As can be seen in Fig. 2 for example, the diameter of the circular openings is greater than the diameter of the propellers 14, wherein the difference in diameter allows for a proper rotation of the propellers 10, while avoiding unnecessary air leakage between the propellers 10 and the openings on the inner border region of the openings.

The plurality of wind turbines 10 is mounted on a support structure 20 extending outside of the flow channel 4. The support structure 20 comprises a plurality of girders 22 forming a grid pattern intersecting at right angles and extending parallel to the top wall 9b. The propeller axis 16 are attached each at an intersection of the girders 22.

The support structure 20 is attached at the girder end portions 22a to a wall structure 24 extending adjacent to the flow channel 4. This construction takes advantages of existing infrastructures close to the implantation site of the wind power station, specially of the flow channel.

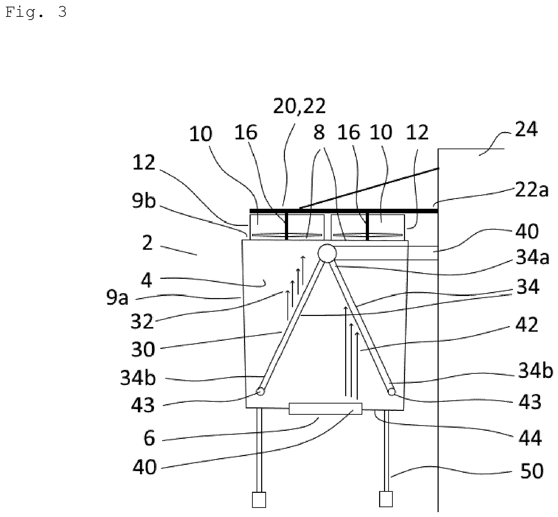

The wind power station surrounds a heat exchanger wall 30 represented schematically in Fig. 3, which is part of a heat exchanger. The heat exchanger wall 30 is arranged in the flow channel 4, in the volume delimited by the lateral walls 9a and the top wall 9b, between the inlet 6 and the outlet 8, as seen in the vertical direction, and designed to transfer heat to air in the flow channel 4 to induce an air flow in the flow channel 4 impinging on the wind turbines 10.

Since air in the flow channel 4 heats up while cooling the heat exchanger wall 30, heated air, schematically represented under numeral 32, flows naturally upwards due to thermal convection and contributes to the air flow. After reaching the outlet 8, air flows in the wind turbines 10 where kinetic energy of the air flow is transformed in electrical energy instead of dissipating in the environment.

In the embodiment disclosed, the heat exchanger wall 30 is part of a heat exchanger which is an air-cooled condenser system, in which process exhaust steam in a power plant is condensed. The heat exchanger wall 30 is formed in the shape of a roof type construction and is composed substantially of heat exchanger tubes combined to form tube bundles 34 on each side of the roof type construction. The roof type construction is arranged above a plurality of ventilating fans 40 improving the cooling properties of the heat exchanger wall 30 by conveying air, schematically represented under numeral 42, through the heat exchanger wall 30 and contributing also to the air flow impinging on the wind turbines 10. The tube bundles 34 are connected by means of their upper ends 34a to steam distribution lines 40. By means of their lower ends 34b, the heat exchanger tubes are each connected to condensate collectors 43 extending parallel to each other.

Presently, a bottom of the flow channel 4 is delimited by a bottom wall 44 in which the inlet 6 is formed and in which the plurality of ventilating fans 40 is arranged. The bottom wall 44 is elevated by way of feet 50 for a better cooling air flow from the outside of the flow channel 4 through the ventilating fans 40 into the flow channel 4.

The number of wind turbines can be adapted to the size of the heat exchanger wall that is intended to be converted in a wind power station. In the embodiment illustrated, the length and the width of the flow channel is about 25 meters and 12 meters, respectively, wherein the lateral walls have a height of about 5 meters. Wind turbines having a propeller diameter of about 4 meters can be used. An air flow having a speed of 6 to 8 meters per second measured at the outlet can be recycled into electrical energy.

## Claims

1. Wind power station (2) comprising a flow channel (4) for a fluid, in particular air, the flow channel (4) extending at least approximately in a vertical direction between an inlet (6) and an outlet (8), and a wind turbine (10) for producing electrical energy having a propeller (14), the propeller (14) being arranged downstream from the outlet (8), as viewed in a direction of flow of the fluid, and overlapping at least partially the outlet, **characterized in that** the wind power station (2) is designed to surround a heat exchanger wall (30) of a heat exchanger, said heat exchanger wall (30) being arranged in the flow channel (4) and designed to transfer heat to fluid in the flow channel (4), wherein a fluid flow induced in the flow channel (4) by heat transfer to fluid impinges on the propeller (14).

2. Wind power station (2) according to claim 1, **characterized in that** the heat exchanger wall (30) is part of an air-cooled condenser system, in which air steam is condensed, in particular an air-cooled condenser for condensing turbine or process exhaust steam in a power plant.

3. Wind power station (2) according to claim 1 or 2, **characterized in that** lateral walls (9a) surround the heat exchanger wall (30) and delimit the flow channel (4) laterally.

4. Wind power station (2) according to any one of claims 1 to 3, **characterized in that** the propeller (14) is rotatable about a propeller axis (16) arranged in the vertical direction.

5. Wind power station (2) according to any one of claims 1 to 4, **characterized in that** the wind turbine (10) is mounted on a support structure (20) extending outside of the flow channel (4).

6. Wind power station (2) according to claim 5, **characterized in that** the support structure (20) comprises a girder (22) extending above the plane of the outlet (8), preferably extending at least approximately parallel to the plane of the outlet (8), and to which the wind turbine (10) is attached.

7. Wind power station (2) according to claim 6, **characterized in that** the girder (22) is designed to be attached at a girder end portion (22a) to a wall structure (24) extending adjacent to the flow channel (24).

8. Wind power station (2) according to claim 6, **characterized in that** the girder (22) is attached at a girder end portion (22a) to a flow channel structure defining the flow channel (4), preferably to the lateral walls (9a) of the flow channel (4).

9. Wind power station (2) according to any one of claims 1 to 4, **characterized in that** the wind turbine (10) is mounted on a support mast extending through the flow channel (4).

10. Wind power station (2) according to any one of claims 1 to 9, **characterized in that** a top wall (9b) delimits the flow channel (4) in the vertical direction, and the outlet (8) is formed in the top wall (9b).

11. Wind power station (2) according to any one of claims 1 to 10, **characterized by** a plurality of wind turbines (10) arranged at least partially above the outlet (8).

12. Conversion of a heat exchanger wall (30) of an air-cooled condenser, in which air steam is condensed, in particular of an air-cooled condenser for condensing turbine or process exhaust steam in a power plant, in a wind power station (2) according to any one of the previous claims.

13. Installation comprising a heat exchanger wall (30) of an air-cooled condenser, in which air steam is condensed, in particular of an air-cooled condenser for condensing turbine or process exhaust steam in a power plant and a wind power station (2) according to any one of the previous claims.
